Europäisches Patentamt

European Patent Office

Office européen des brevets

(19)

(11) Veröffentlichungsnummer: **0 212 676**
**A2**

(12) # EUROPÄISCHE PATENTANMELDUNG

(21) Anmeldenummer: **86112683.7**

(51) Int. Cl.⁴: **G01T 1/167 , G01T 1/163**

(22) Anmeldetag: **22.06.85**

(30) Priorität: **18.02.85 DE 3505527**

(43) Veröffentlichungstag der Anmeldung:
**04.03.87 Patentblatt 87/10**

(60) Publication number of the original application in accordance with Art.76 EPC: **0 196 354**

(84) Benannte Vertragsstaaten:
**FR GB IT SE**

(71) Anmelder: **HERFURTH GMBH
Beerenweg 6 - 8
D-2000 Hamburg 50(DE)**

(72) Erfinder: **Rische, Uwe W., Dipl.-Phys.
Waldweg 15
D-2106 Bendestorf(DE)**
Erfinder: **Gerlach, Rainer, Dipl.-Ing.
Hellgrund 56
D-2000 Wedel/Holst(DE)**

(74) Vertreter: **Kretzschmar, Otto Robert, Dipl.-Ing.
Beim Strohhause 34
D-2000 Hamburg 1(DE)**

(54) **Vorrichtung zur Kontaminationsüberwachung gegen Strahlungsverseuchung von Personen.**

(57) Eine Vorrichtung zur Kontaminationsüberwachung gegen Strahlungsverseuchung von Personen hat winklig zusammengeschlossene Detektor-Anordnungen (1, 2) als starre Baugruppe, die um eine senkrechte Achse (35) im Winkel zwischen den zusammengeschlossenen Detektor-Anordnungen verdrehbar ist. An der Drehachse ist ein spannbarer Rückstellantrieb (37) vorgesehen. Zwischen den senkrechten flächigen Detektor-Anordnungen ist, wenn sie sich in ihrer Ruhestellung befinden, unten eine Trittfläche als Bodenplatte mit einem Fußdetektor angeordnet.

Fig.1

EP 0 212 676 A2

## Vorrichtung zur Kontaminationsüberwachung gegen Strahlungsverseuchung von Personen

Die Erfindung betrifft eine Vorrichtung zur Kontaminationsüberwachung gegen Strahlungsverseuchung von Personen mit gegebenenfalls in der Höhe unterteilten Detektorsäulen in Gestalt von jeweils in einer senkrechten Ebene angeordneten flächigen Detektoren, die bezüglich der verschiedenen senkrechten Detektor-Anordnungen winklig einander zugeordnet sind und einen Raum für eine zu untersuchende Person begrenzen, wobei zwischen den senkrechten flächigen Anordnungen unten eine Trittfläche als Bodenplatte mit einem Fußdetektor angeordnet ist.

Bei Ausführung solcher Vorrichtungen als Kontaminationsschleusen werden Vorder-und Rückseite einer Person gemessen, wobei die Einstellung gleicher Abstände problematisch ist. Bei zwei Messungen ergeben sich kleine Abstände und große Empfindlichkeit.

Bekannt sind Kontaminationsschleusen, welche seitliche Ein-und Ausgangstüren haben, die auch mit Detektoren ausgestattet sind, und die am Boden zwei Detektoren zum Aufstellen der Füße aufweisen. Der Aufwand ist wegen der Türen erheblich, und zwar sowohl hinsichtlich des benötigten Raumes als auch in der Ausstattung. Die Durchgangszeiten erhöhen sich.

Aus der DE-PS 20 16 857 ist eine Personenverkehrsüberwachungs-Einrichtung bekannt, die eine Schleuse mit zwei Türen aufweist, welche so gesteuert werden, daß sich nach Öffnen einer Tür die andere nur öffnen läßt, wenn keine Kontamination festgestellt wurde.

Eine Schleuse mit zwei Türen geht auch aus der DE-PS 21 35 578 hervor. Dabei sind die Türen durch die in eine Schleusenverriegelungs-Einrichtung eingeschalteten Steuermittel so gesteuert, daß sich nach dem Öffnen einer der Türen die andere Tür nur öffnen läßt, wenn keine Aktivität oder Kontamination an der sich in der Schleuse befindlichen Person festgestellt wurde.

Eine bekannte Ausführung hat eine in Draufsicht winklige Konfiguration von wenigstens drei Detektorsäulen. In Draufsicht flankieren dabei zwei Säulen eine mittlere Säule unter einem Winkel in der Größenordnung von etwa 135°. Diese Ausführung ermöglicht zwar als nischenartige Ausbildung der Überwachungsvorrichtung einen engen Eintritt einer zu überwachenden Person, dabei entsteht aber der Nachteil zweier Meßlücken in den Winkeln zwischen den winklig zueinander angeordneten äußeren Detektorsäulen und einer mittleren Detektorsäule. Die Stellung einer Person ist in der bekannten Ausführung undefiniert, weil nur an den äußeren Rändern der äußeren Säulen Hand-Boxen zur Unterbringung der Hände angeordnet sind. Ungenauigkeiten treten zwischen den Messungen der Vorder-und Rückseite einer Person auf.

Dazu wird auch auf das DE-GM 75 15 406 verwiesen, gemäß welchem seitlich einer Säule als Wandteil einer Schleuse Zählboxen zur Überwachung der Hände mit Lichtkontakten ausgeführt sind, die die Einführung der Hände zulassen.

Bei diesen bekannten Ausführungen ergeben sich Unterschiede bei der Überwachung der Vorder-und der Rückseite einer Person. Die mehr oder weniger große Anspannung der Arme führt dabei zu einer undefinierten Grundeinstellung.

Zur Vermeidung dieses Nachteils ist aus der DE-OS 24 13 027 mit einer nur in horizontaler Richtung unterteilten Säule von Detektoren bekannt, die Fußplatte als Drehteller oder Drehscheibe auszuführen, so daß dadurch eine zu überprüfende Person ihre jeweilige Stellung beibehalten kann.

Der Aufwand ist erheblich; die Integration von Hand-Boxen ist nicht möglich. Hier ist auch nur eine Detektorsäule angeordnet, so daß sich eine unzureichende Meßgeometrie ergibt.

Bei der Ausführung von Meßeinrichtungen zur Überwachung von Menschen ist bekannt, eine Standard-Figur als sogenannte Referenzfigur oder als sogenannten "ICRP-reference man" zugrunde zu legen. Dabei ist unter bestimmten Bedingungen eine elliptische Referenzfigur mit 35 cm Hauptachse und 95 cm Umfang (ICRP) vorgesehen.

Der Erfindung liegt die Aufgabe zugrunde, unter Verwendung von säulenartigen senkrechten Anordnungen flächiger Detektoren mit einem Winkel zueinander bezüglich der Säulen den Durchgang vieler Personen in schnellerer Reihenfolge zu ermöglichen und dabei bei gutem Untersuchungsergebnis mit geringerem Aufwand auszukommen.

Diese Aufgabe wird erfindungsgemäß dadurch gelöst, daß die winklig zusammengeschlossenen Detektor-Anordnungen als starre Baugruppe um eine senkrechte Achse im Winkel verdrehbar vorgesehen sind und an der Drehachse ein spannbarer Rückstellantrieb vorgesehen ist. Dabei wird für bestimmte Zwecke eine Änderung des Winkels einbezogen oder zugelassen. Ein solcher Zweck ist die Eignung als Durchgang. Hierbei wird nicht ausgeschlossen, daß für eine wenigstens über eine gewisse Zeit verbleibende Winkeleinstellung des Winkels zwischen winklig zueinander vorgesehenen Detektoranordnungen Stellschrauben angeordnet sind. Für eine vorübergehende Anpassung können zweckmäßig zwischen den säulenartigen Detektoranordnungen Sperrgetriebe vorgesehen sein, die die Einstellung bis zu einem bestimmten Grad begrenzen und eine Rückstellung vorsehen. Dadurch kann eine Anpassung an verschiedene Referenzfiguren vorgenommen werden und auch eine mechanische oder elektromechanische mit Einstellmagneten vorgesehene Rast-oder Verriegelungsvorrichtung, gegebenenfalls auch mit Einstellantrieb, vorhanden sein, damit eine Anpassung an eine auszumessende Person nach formalen Grenzgrößen möglich ist.

Diese Ausführungen beziehen durchaus zunächst einen winklig bestimmten Zusammenschluß von flächigen, insbesondere zwei Detektorsäulen ein, ergeben aber ein bevorzugtes Merkmal für die drehbare Anordnung des Säulenwinkels.

Dabei liegt ein besonders vorteilhaftes Merkmal darin, daß mehrere winklig zusammengeschlossene Detektor-Anordnungen mit beidseitig angeordneten Detektoren als Drehtür angeordnet sind, deren Flügel von Detektor-Anordnungen gebildet sind, wobei eine Feststell-und Freigabevorrichtung für diese Drehtür vorgesehen ist und in Verbindung mit einer Auswertanordnung der Detektoren steht. Dieses ermöglicht besonders den Durchgang vieler Personen in schnellerer Reihenfolge, als mit bekannten Ausführungen möglich ist. In dieser Ausführung sind die Flügel der Drehtür, insbesondere die Detekorsäulen, welche solche Flügel bilden, starr zueinander angeordnet.

Dabei liegt ein besonderer Vorteil auch darin, daß eine Luftschleusenwirkung zwischen heißen und kalten Bereichen erreicht werden kann.

Wenn oben von einer starren Anordnung zueinander geschrieben ist, gilt dieses für den Normalbetrieb. Einbezogen wird für die starre Zuordnung ein auslösbares Sperrgetriebe, um für einen Notfall eine Lösung der starren Zuordnung und durch Aufklappen der Drehtür einen Notdurchgang zu schaffen.

In einer bevorzugten Ausbildung, in welcher die flächigen Detektorsäulen gegeneinander winklig, aber drehbar gelagert sind, ist an der Drehachse eine Sperrgetriebe vorgesehen, das eine Drehung nur in einer Richtung zuläßt und eine Rückdrehung nach Durchführung einer bestimmten Winkeldrehung bewirkt. Hierbei ist eine Drehung der Einheit vorgesehen, einbezogen wird aber auch, daß einzelne Flügel der Baugruppe mit den flächigen Detektorsäulen, insbesondere für einen Notdurchgang für sich drehbar und einstellbar sind. Vorbehalten bleibt aber, daß die Flügel, welche die einzelnen Säulen bilden, eine feste Raststellung zueinander haben, in der sie immer automatisch vermittels Federn oder dergleichen Rückstellantriebe zurückgeführt werden.

Durch eine vorteilhafte Verwendung nur zweier flächiger Detektorsäulen für eine Messung wird die Voraussetzung nicht nur einerseits für eine drehtürartige Anordnung mit einer einheitlichen - scharnierartigen Lagerung um eine Schwenkachse geschaffen, sondern zugleich auch unter Einschaltung von Gesperren die wechselseitige Winkelverschwenkung flächiger Detektorsäulen zueinander, immer in der Begrenzung zu einer Rückstellung in die definierte Winkellage nach Auslenkung eines Flügels zur Ermöglichung eines Durchganges einer gemessenen Person.

Hierbei wird einbezogen, daß die um eine senkrechte Achse drehbare Anordnung in einer Durchgangsschleuse vorgesehen ist, deren wenigstens eine Wand eine Auskehlung zum Durchgang des Randes einer flächigen Detektorsäule hat.

In einer besonders vorteilhaften Ausgestaltung ist dabei die mit einem festen Winkel vorgesehene Konfiguration von Detektoranordnungen and der Drehachse mittels eines Rückstellgetriebes geführt, welches bei Drehung des Detektorsäulenwinkels zwecks Ausgang einer Person spannbar ist und nach Freigabe eine Rückstellung in die Aufnahmeposition für eine andere Person bewirkt. Insofern wird der Drehtür-Effekt noch verbessert.

In besonders bevorzugter Ausführung besteht dabei die Konfiguration aus zwei Detektor-Anordnungen.

Wenn in der vorteilhaften Ausgestaltung nur zwei unter einem Winkel zusammengeschlossene senkrechte Detektor-Anordnungen vorgesehen sind, dann sind vorteilhaft in jeder Detektor-Anordnung die Detektoren in einem mittleren Bereich in bezug zu einer für eine Person als Referenzfigur vorgesehenen Abmessung in senkrechter Richtung unterteilt und diese senkrechten Unterteilungen an einer Stelle vorgesehen, an welcher sich die flächigen Anordnungen am nächsten an der Referenzfigur bzw. an dem Körper einer auf der Grundplatte stehenden Person befinden. Hierbei ist der Fußdetektor zweckmäßig mit zwei Detektoreinheiten, eine für jeden Fuß, ausgeführt. Dabei gleichen die durch die Unterteilung gebildeten Einheiten in der Auswertung den durch die Unterteilung in nächster Annäherung an die Referenzfigur herbeigeführten Einfluß aus.

Gegenüber bekannten im Meßbereich vergleichbaren Ausführungen kann dabei mit weniger Detektoren und auch in einem einfachen Aufbau ausgekommen werden, wobei die geringe Anzahl von Säulen mit flächigen Detektoren eine Verminderung von Lücken in der horizontalen Meßgeometrie bewirkt, so daß bei einfacherer Konfiguration ein genaueres Ergebnis erreicht wird. Durch die angegebene Teilung der Detektoren wird zugleich eine Reduzierung des Null-Effekts erreicht. Wesentlich ist aber, daß das Empfindlichkeitsmaximum in der Detektormitte gegenüber den übrigen Bereichen nicht überproportional hoch wird. Dadurch kann ein gleichmäßiges Empfindlichkeitsprofil mit nur zwei Detektorsäulen realisiert werden.

Aus obigen Darlegungen ergibt sich, daß diese Lösung mit der Referenzfigur und den Winkeln korrespondiert, wobei auch in Abhängigkeit von einer Referenzfigur der Winkel und die genaue Lage der senkrechten, insbesondere mittleren Unterteilung der Detektorsäulen im mittleren Bereich anzupassen sind, so daß die Trennung benachbarter Detektoren möglichst genau im engsten Annäherungsbereich an die zu untersuchende Person liegt.

Die Referenzfigur ist zwar ein an sich absoluter Wert, er kann sich aber im Vergleich zu anderen geographischen Gebieten verändern, so daß eine Anpassung vorteilhaft ist.

Einbezogen wird zweckmäßig die Anordnung von Unterarm-Detektoren an zwei winklig zueinander in einer verdrehbaren Baugruppe vorgesehenen Detektor-Anordnungen. Die Anwendung von Unterarm-Detektoren ist eine vorteilhafte Ausgestaltung gegenüber bisher bekannten Handboxen, um durch eine richtungsbestimmte Festlegung der Unterarme mit den Händen die Einstellung der übrigen Armgelenke durch eine Vorgabe der richtungsmäßigen Festlegung der Unterarme zu beschränken. Hierdurch wird die Positionierung zu untersuchender Personen verbessert.

In einer bevorzugten Ausführungsform ist die Drehachse der insbesondere beiden Detektor-Anordnungen an einer Wand des Durchgangs angeordnet, und die Detektor-Anordnungen sind als Klapptüren vorgesehen, wobei eine wechselseitige Steuerung bei Ausklappung einer Detektor-Anordnung eine Lageveränderung der anderen Detektor-Anordnung verhindert und ferner eine abwechselnde Verriegelung und Freigabe beider Detektor-Anordnungen vorgesehen ist. Damit wird eine Schleusenausführung geschaffen, die das Untersuchungsergebnis gegenüber bekannten Ausführungen verbessert, aber zugleich auch Ausgestaltungen zuläßt, die die Effizienz der Schleuse verbessern, indem der Durchgang von Personen maßgeblich erhöht werden kann. Auch diese Ausführung eignet sich wie die anderen bei entsprechender Ausbildung der wechselseitigen Steuerung und der eingesetzten Antriebs-oder Verriegelungsvorrichtungen in den Gelenken der senkrechten Detektoranordnungen zu einer Auslösung im Sinne eines Notdurchgangs. Die Vorrichtungen, auch wenn sie in Form einer Schleuse ausgebildet sind, können dabei als in sich geschlossene und in beliebiger Weise einsetzbare Baugruppen ausgeführt sein.

Die Erfindung wird im folgenden anhand von Ausführungsbeispielen erläutert, die in der Zeichnung dargestellt sind. Die Zeichnungen sind - schematisch. In der Zeichnung zeigen:

Fig. 1 eine Draufsicht auf eine Schleuse in einer prinzipiellen erfindungsgemäßen Ausführung;

Fig. 2 eine der Fig. 1 entsprechende Draufsicht auf eine abgewandelte Ausführung;

Fig. 3 eine Draufsicht auf eine weitere Ausführungsform einer erfindungsgemäßen Schleuse;

Fig. 4 eine Draufsicht auf eine erfindungsgemäße Schleuse in einer gegenüber Fig. 3 abgewandelten Ausführung;

Fig. 5 eine Draufsicht auf eine Vorrichtung mit senkrechten Detektoranordnungen und einer eingezeichneten vertikalen Unterteilung in bezug zu einer Referenzfigur;

Fig. 6 eine der fig. 5 entsprechende Ansicht mit einer zusätzlichen Ausgestaltung in Form von Unterarm-Boxen;

Fig. 7 eine flächige Ansicht einer Detektoranordnung nach den Fig. 5 oder 6, gesehen in Richtung des Pfeils VII -VII in Fig. 5, auch zur Erläuterung der Anordnung der Unterarm-Boxen.

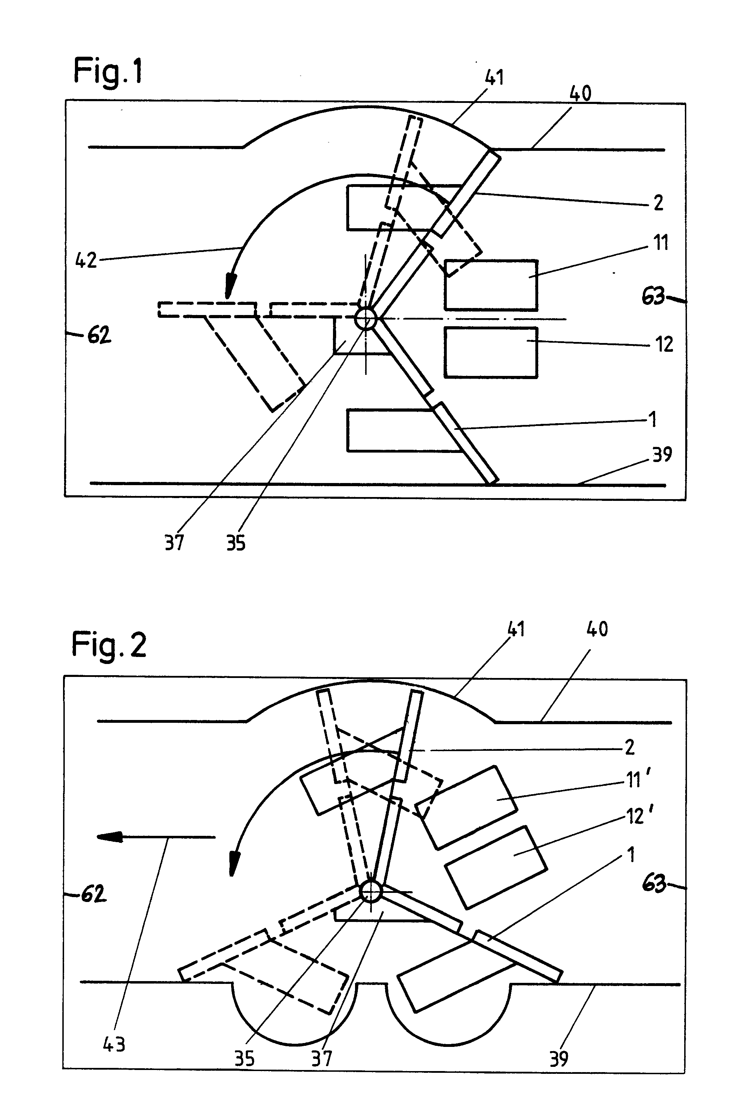

In den Fig. 1 -4 sind jeweils winklig zueinander angeordnete senkrechte flächige Detektoranordnungen in Form zweier Detektorsäulen 1, 2 gezeigt, die schwenkbare Teile eines Durchganges bilden.

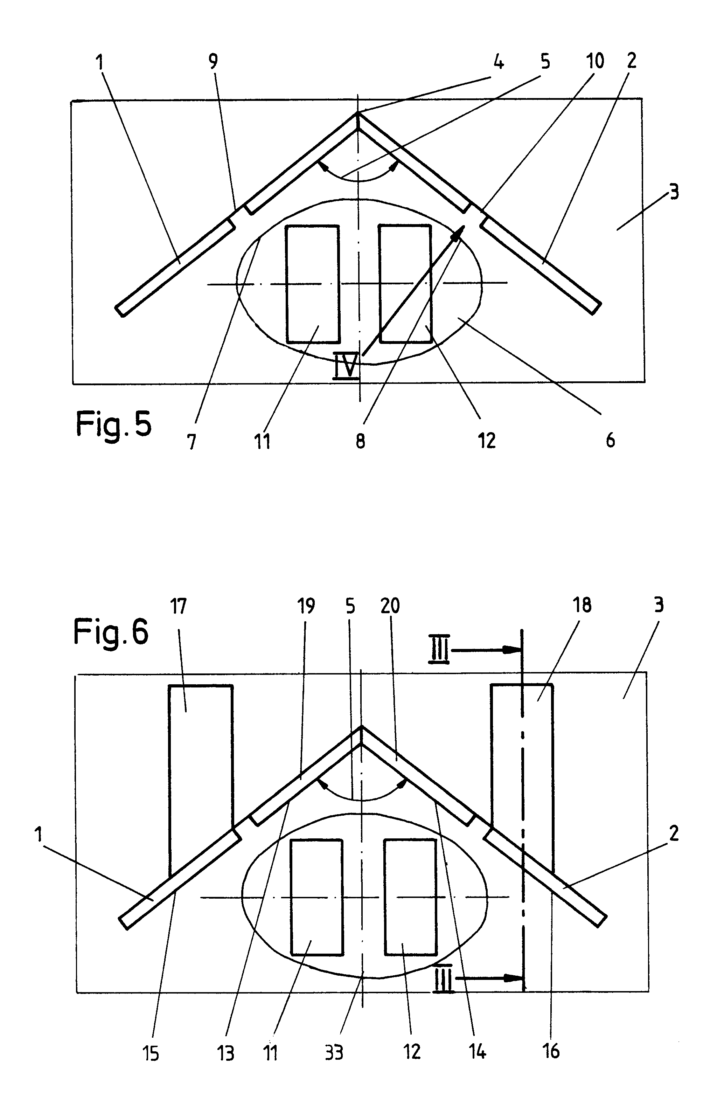

Diese vorteilhafte Ausführung der Detektoren-Baugruppe an sich wird anhand der Fig. 5 -7 erläutert.

In den Ausführungen nach den Fig. 5 und 6, die Draufsichten zeigen, sind zwei Detektorsäulen 1, 2 auf einer Bodenfläche bzw. -platte 3 angeordnet. Beide Detektorsäulen 1, 2 sind bei 4 unter einem Winkel 5 zusammengeschlossen, der im Zusammenhang mit der Ausbildung der Detektorsäulen eine wesentliche Bedeutung hat. Dieser Winkel beträgt unter Einbeziehung aller oben beschriebenen erweiterten Grenzen im bevorzugten Ausführungsbeispiel 104°. Dieser Winkel ist von Einfluß hinsichtlich einer Referenzfigur 6 entsprechend der so umrandeten Ellipse. Erkennbar ist dabei, daß der Ellipsenrand bei 7 und 8 Umfangsflächen erhöhter Annäherung an die Detektorsäulen 1, 2 aufweist. An diesen Ellipsenrand-Abschnitten 7, 8 haben die Detektorsäulen 1, 2 eine senkrecht verlaufende Unterteilung 9, 10. Dadurch wird in diesem Bereich die Empfindlichkeit herabgesetzt und ein möglichst wahres, d.h. gleichmäßiges Meßergebnis ohne überflüssige Meßwerteinschnitte erreicht. Die Unterteilung ist vorteilhaft mittig in der Breite der Detektorsäulen angeordnet, wobei sich in der Annäherung der Unterteilung an die engste Stelle zur Referenzfigur auch die Erstreckung in bezug zur Referenzfigur ergibt.

Diese Ausgestaltung geht auch davon aus, daß die inneren ebenen Aufnahmeflächen 13, 14 bzw. 15, 16 der beiden Detektorsäulen 1, 2 im Bereich des Winkels 5 einander zugekehrt sind.

In einer solchen Ausführung steht die Person mit ihren Füßen insbesondere auf einem bzw. einem in zwei Detektoreinheiten 11, 12 aufgeteilten Fußdetektor. Der Füßdetektor definiert als Trittfläche mit seinen beiden Detektoreinheiten 11, 12 die Stellung jeden Fusses.

Diese beiden Detektorsäulen 1, 2 haben in ihrem oberen Bereich zwei Unterarm-Boxen 17, 18, die parallel zueinander verlaufen und bezüglich der Unterteilungen 9, 10 unmittelbar neben dem vom Winkel 5 abgekehrten Rand der inneren Aufnahmeflächen 13, 14 der inneren Detektoren 19, 20 ausgehen.

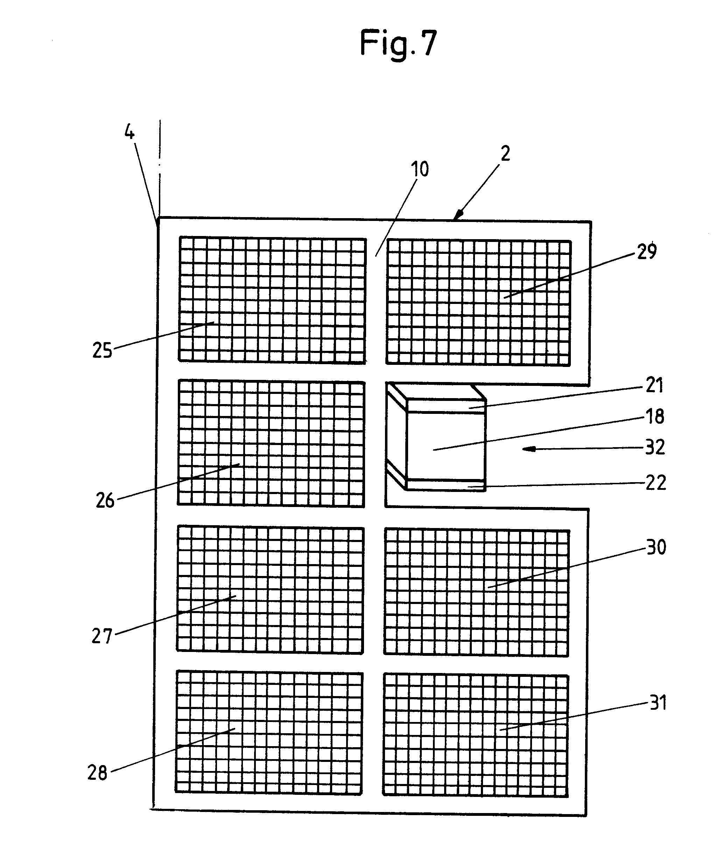

In Fig. 7 ist eine Detektorsäule 2 quasi in Innenansicht dargestellt. Dabei zeigt sich, daß die Unterteilung 10 von oben nach unten durchläuft. Die Detektorsäule ist im übrigen auch durch horizontale Unterteilung in einzelne Detektoren bzw. Detektorfelder 25 bis 31 aufgegliedert, wobei bevorzugt wird, daß diese rechteckig flächig ausgeführten Detektoren mit ihrer längeren Achse in senkrechter Richtung angeordnet sind. Gemäß Fig. 7 hat die Detektorsäule neben dem winkligen Zusammenschluß mit der anderen Detektorsäule bei 4 eine senkrechte Reihe von vier in der Höhe unterteilten Detektoren 25 -28, während bezüglich des Zusammenschlusses bei 4 außerhalb der senkrechten Untertei lung 10 nur ein Detektorenfeld 29 und parallel zu den unteren Detektoren 27, 28 Detektorfelder 30 und 31 vorhanden sind. Dies bedeutet eine Aussparung neben dem Detektor 26 bzw. Detektorfeld nach außen bezüglich der Unterteilung 10. In dem dadurch geschaffenen Freifeld 32 ist die Unterarm-Box 18 zum Beispiel mit zwei flächigen Detektoren 21, 22 angeordnet. Hierbei wird in Kauf genommen, daß in diesem Bereich der Körper der Referenzfigur einer geringeren Meßabdeckung unterliegt, aber die Anordnung der Unterarm-Boxen in ihrem Verlauf mit Abstand von der Mittellinie 33 (Fig. 6) erfüllt dabei durch Einführung des Unterarms eine unwillkürliche Fesselung derart, daß die Meßergebnisse optimal erreicht werden.

Eine aus einer solchen Anordnung gebildete "feste Einheit" bezieht einen Sockel mit der Bodenplatte 3 ein. Der Ausdruck "feste Einheit" bezieht auch den Winkel zwischen den beiden flächigen Detektorsäulen 1, 2, wenigstens im Meßzustand bzw. Meß-Augenblick, ein. Dieses bedeutet, daß die beiden flächigen Detektorsäulen 1, 2 auch als Einheit insgesamt schwenkbar sein können oder aber auch relativ zueinander - schwenkbar sind.

Diese Ausführung bedeutet ferner, daß für die Detektorsäulen 1, 2 jeweils Scharnierstangen 35, 36 (Fig. 1, 2 und 4) vorgesehen sind, an denen die Detektorsäulen 1, 2 gegebenenfalls verdrehbar gelagert sind, wobei aber zwischen den einzelnen Detektorsäulen 1, 2 und den Scharnierstangen 35, 36 Lager und/oder Gesperremittel 37, 38 mit einer einseitig wirkenden Gesperrevorrichtung und auch mit einem Rückstellmechanismus, insbesondere nach Art eines automatischen Türschließers, vorgesehen sind. Dabei enthalten die Gesperremittel in einer vorteilhaften Ausführung einen spannbaren Rückstellantrieb.

Solche Gesperremittel 37, 38 sind über die Höhe bzw. axiale Länge der Scharnierstangen 35, 36 verteilt angeordnet, wobei es sich versteht, daß die Achse der Scharnierstangen 35, 36 mit dem Scheitel des Winkels bei 4 (Fig. 5) übereinstimmt.

Als Gesperre können handelsübliche Vorrichtungen mit Rückführzylinderkolben-Einrichtungen eingesetzt werden.

Bei der Ausführung nach den Fig. 1 und 2 ist die Baugruppe mit den beiden flächigen Detektorsäulen 1, 2 innerhalb von Wänden 39, 40 bzw. 41 angeordnet, wobei die Wand 39 gerade durchgeht und die Wand 40 eine kreisbogenförmige Auskehlung 41 aufweist, damit ein Flügel der drehtürartigen Anordnung verschwenken kann, welcher Flügel durch eine flächige Detektorsäule 2 gebildet ist.

Die Fig 1 zeigt eine Grundeinstellung der drehtürartigen Verschlußanordnung mit den beiden flächigen Detektorsäulen 1, 2 zur Mittellinie der - schleusenparallelen Detektoreinheiten 11, 12 für die Füße. Bei dieser Ausführung ist eine Verschwenkung im Sinne des Pfeils 42 in eine Stellung vorgesehen, in welcher eine gemessene Person, nachdem sie von den beiden Detektoreinheiten 11, 12 zurückgetreten ist, längs der Wand 39 durchgehen kann.

Bei der Ausführung nach Fig. 2 liegt eine Abwandlung darin, daß die Grundstellung der Baugruppe mit den flächigen Detektorsäulen 1, 2 von vornherein asymmetrisch zum Durchgang in Richtung des Pfeils 43 ist und damit auch die beiden für das Aufstellen der Füße vorgesehenen Detektoreinheiten 11', 12' in ihrer Ausrichtung schräg zur Durchgangsrichtung entsprechend dem Pfeil 43 verlaufen. Bei dieser asymmetrisch zum Durchgang liegenden Grundstellung wird einbezogen, daß die Detektorsäule 2 bis in die Stellung 2', d.h.

bis an die Wand 39 geschwenkt wird, so daß auch in dieser Stellung die Abdichtung gewährleistet ist, wobei im übrigen auch der Ausgang einer Person vereinfacht bzw. erleichtert wird.

Bei dieser Ausführung sind entsprechend der Auskehlung 41 Schwenkräume 60 -61 für die Unterarm-Boxen in der Wand 39 nischenartig und gegebenenfalls auch mit nicht näher eingezeichneten Dichtungsmitteln vorgesehen.

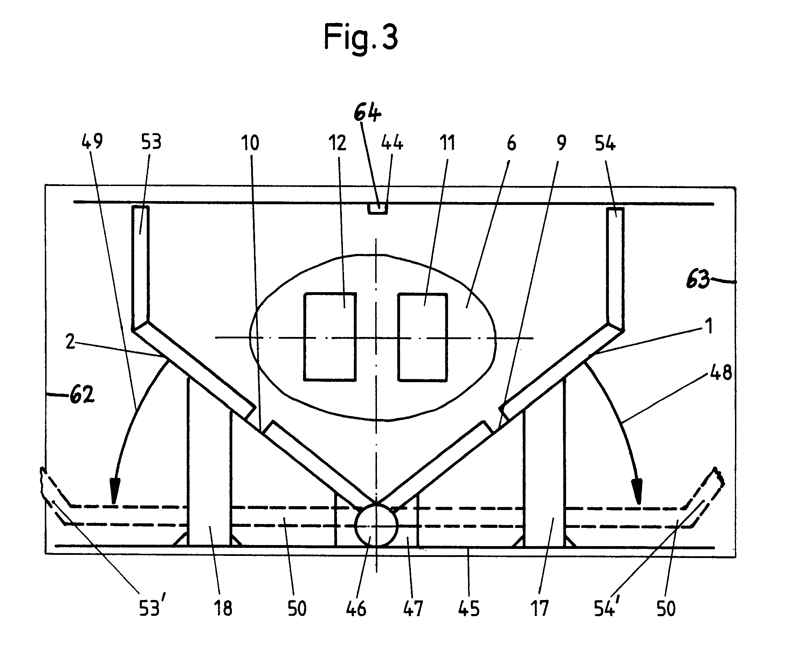

Fig. 3 zeigt ebenfalls eine Durchgangsschleuse mit den parallelen Wänden 44, 45. An der Wand 45 ist dabei eine senkrechte Drehachse 46 als Gelenk zwischen zwei Detektorsäulen 1, 2, die die Unterteilung 9, 10 haben, angeordnet.

Bezüglich der senkrechten Drehachse ist ein Gesperregehäuse als Steuerung 47 vorgesehen. Dieses ermöglicht unter wechselseitiger Überwachung oder Einstellung, daß die beiden flächigen Detektorsäulen 1, 2 in Richtung der Pfeile 48, 49 nicht gleichzeitig, aber abwechselnd in Stellungen 50, 51 verschwenkbar sind, um einen Durchgang freizugeben. Die wechselseitige Abhängigkeit kann durch eine Recheneinrichtung oder Gegensperre gewährleistet werden, deren Antriebs-oder Freigabe-Element unter dem Einfluß einer Meßauswertungsvorrichtung steht.

Die beschriebene Ausführung läßt nun zwei Möglichkeiten offen. In der gezeigten Ausführungsform sind die beiden Unterarm-Boxen 17, 18 fest and der Wand 45 angeordnet, so daß sie schon aufgrund auch der Aussparung, die sich aus der Ausführung nach Fig. 7 bei 32 ergibt, ihre Stellung beibehalten können. Trotzdem wird immer ein Durchgang wenigstens über die halbe Breite zwischen den Wänden 44, 45 freigegeben, wenn ein Meßergebnis erreicht ist oder eine neue Person eingelassen werden soll.

Dies gilt inbesondere im Zusammenhang damit, daß an den Enden der beiden flächigen Detektorsäulen 1, 2 senkrechte Trennwand-Abschnitte 53, 54 angeordnet sind, die dann in die gestrichelten Stellungen 53' oder 54' kommen.

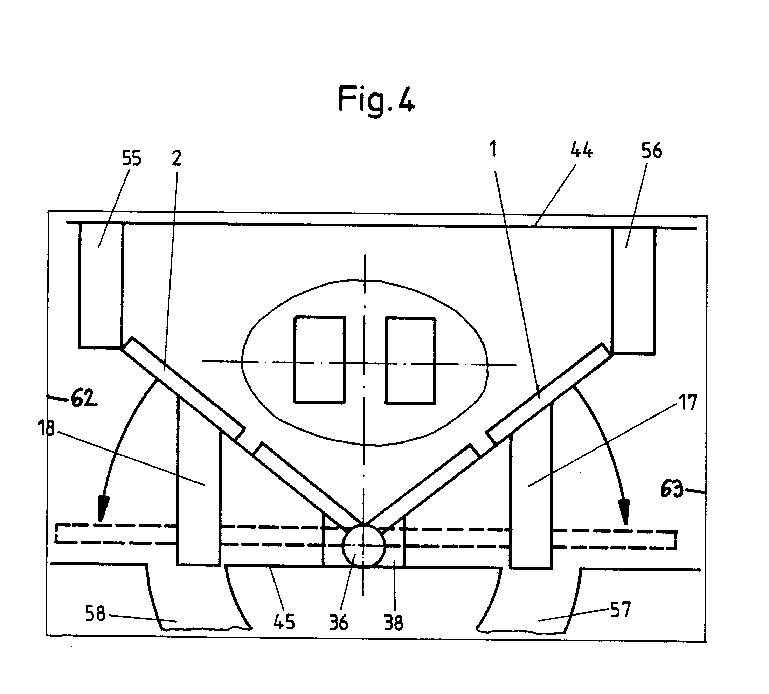

Nach Fig. 4 sind an der Wand 44 feste Wandteile 55, 56 vorgesehen, an deren Enden die senkrechten Ränder der beiden senkrechten Detektorsäulen 1, 2 vorbeiklappbar sind. In dieser Ausführung sind die Unterarm-Boxen 17, 18 fest an den flächigen Detektorsäulen 1, 2 angeordnet und in der Wand 45 in insbesondere gekrümmte Aufnahmeräume 57, 58 zum wechselweisen Eintritt der beiden Unterarm-Boxen 17, 18 vorgesehen, wenn entweder die eine oder die andere der beiden flächigen Detektorsäulen 1, 2 um die Achse 36 ausgelenkt wird.

In den Fig. 1 bis 4 kann für die Gesperremittel 37, 38 bzw. Gesperregehäuse als Steuerung 47 eine Notauslösung für den Gefahrenfall derart vorgesehen sein, daß der Winkelverband zwischen den beiden Detektorsäulen 1 und 2 gelöst werden kann, so daß ein Aufklappen zur Herstellung eines Notdurchgangs zwischen den Wänden der Schleuse möglich ist. Zu diesem Zweck kann eine äußere Steuerung, die nicht dargestellt ist, eingesetzt werden oder aber auch ein Nothebel 64 im Inneren der Schleuse, und zwar insbesondere zwischen den in der Grundstellung befindlichen Detektorsäulen 1, 2 (Fig. 3).

Auch wenn die Schleusenausführungen mit den Wänden 39, 40 bzw. 44, 45 und ihren Ansätzen vorgesehen sind, dann zeigen die seitlichen Begrenzungen 62, 63, daß es sich hierbei in einer vorteilhaften Ausgestaltung um in sich geschlossene kanalartige Baugruppen handelt, die selbständig handelsfähig und vor allem auch - schnell an einer erforderlichen Stelle einsetzbar sind. Solche Baugruppen sind dabei mit den gezeigten Seitenwänden, einem Boden und einer Decke ausgeführt, wobei sich die Detektorsäulen 1 und 2 zwischen Boden und Decke erstrecken.

## Ansprüche

1. Vorrichtung zur Kontaminationsüberwachung gegen Strahlungsverseuchung von Personen, mit gegebenenfalls in der Höhe unterteilten, jeweils in einer senkrechten Ebene angeordneten flächigen Detektoren, die bezüglich der verschiedenen senkrechten Detektor-Anordnungen winklig einander zugeordnet sind und einen Raum für eine zu untersuchende Person begrenzen, wobei zwischen den senkrechten flächigen Anordnungen unten eine Trittfläche als Bodenplatte mit einem Fußdetektor angeordnet ist, dadurch gekennzeichnet, daß die winklig zusammengeschlossenen Detektor-Anordnungen (1, 2) als starre Baugruppe um eine senkrechte Achse (35, 36, 46) im Winkel verdrehbar vorgesehen sind und an der Drehachse ein spannbarer Rückstellantrieb (37, 38) vorgesehen ist.

2. Vorrichtung nach Anspruch 1, dadurch gekennzeichnet, daß mehrere winklig zusammengeschlossene Detektor-Anordnungen (1, 2) mit beidseitig angeordneten Detektoren als Drehtür angeordnet sind, deren Flügel von Detektor-Anordnungen (1, 2) gebildet sind, wobei eine Feststell- und Freigabevorrichtung für diese Drehtür vorgesehen ist und in Verbindung mit einer Auswertanordnung der Detektoren steht.

3. Vorrichtung nach Anspruch 1 oder 2, dadurch gekennzeichnet, daß an der Drehachse - (35, 36) ein Sperrgetriebe (37, 38) vorgesehen ist, das eine Drehung nur in einer Richtung zuläßt und eine Rückdrehung nach Durchführung einer bestimmten Winkeldrehung bewirkt.

4. Vorrichtung nach einem der Ansprüche 1 bis 3 dadurch gekennzeichnet, daß die um eine senkrechte Achse (35) verdrehbare Anordnung in einer Durchgangsschleuse vorgesehen ist, deren wenigstens eine Wand (40) eine Auskehlung (41) zum Durchgang des Randes einer Detektor-Anordnung - (2) hat.

5. Vorrichtung nach Anspruch 4, dadurch gekennzeichnet, daß die mit festen Winkeln vorgesehene Konfiguration von Detektor-Anordnungen (1, 2) an der Drehachse (35, 36) mittels eines Rückstellgetriebes (37, 38) geführt ist, welches bei Drehung der Detektor-Anordnungen zwecks Ausgangs einer Person spannbar ist und nach Freigabe eine Rückstellung in die Aufnahmeposition für eine andere Person bewirkt.

6. Vorrichtung nach Anspruch 5, dadurch gekennzeichnet, daß die Konfiguration aus zwei Detektor-Anordnungen (1, 2) besteht.

7. Vorrichtung nach einem der Ansprüche 1 bis 6, dadurch gekennzeichnet, daß die Achse der insbesondere beiden Detektor-Anordnungen (1, 2) an einer Wand (45) des Durchgangs angeordnet ist und die Detektor-Anordnungen (1, 2) als Klappturen vorgesehen sind, wobei eine wechselseitige Steuerung (47) bei Ausklappung einer Detektor-Anordnung (1, 2) eine Lageveränderung der anderen Detektor-Anordnung (2, 1) verhindert und ferner eine abwechselnde Verriegelung und Freigabe beider Detektor-Anordnung vorgesehen ist.

8. Vorrichtung nach einem der Ansprüche 1 bis 7, dadurch gekennzeichnet, daß die Antriebs-und Verriegelungsvorrichtungen für die Detektor-Anordnungen (1, 2) auslösbar sind, um eine Öffnung im Sinne eines Notdurchgangs vorzusehen.

9. Vorrichtung nach einem der Ansprüche 1 und 3 bis 8, dadurch gekennzeichnet, daß nur zwei unter einem Winkel zusammengeschlossene senkrechte Detektor-Anordnungen vorgesehen und in jeder Detektor-Anordnung (1, 2) die Detektoren in einem mittleren Bereich in bezug zu einer für eine Person als Referenzfigur (6) vorgesehenen Abmessung in senkrechter Richtung unterteilt sind, und daß diese senkrechter Richtung unterteilt sind, und daß diese senkrechten Unterteilungen (9, 10) an einer Stelle vorgesehen sind, an welcher sich die flächigen Anordnungen am nächsten an der Referenzfigur (6) bzw. an dem Körper einer auf der Grundplatte stehenden Person befinden, und daß der Fußdetektor mit zwei Detektoreinheiten (11, 12), eine für jeden Fuß, ausgeführt ist.

10. Vorrichtung nach einem der Ansprüche 1 bis 9, gekennzeichnet durch die Anordnung von Unterarm-Detektoren (17, 18) an zwei winklig zueinander in einer verdrehbaren Baugruppe vorgesehenen Detektor-Anordnungen (1, 2).

Fig.1

Fig.2

# Fig. 3

# Fig.4

Fig.5

Fig.6

# Fig. 7